Europäisches Patentamt

European Patent Office

Office européen des brevets

(11) Publication number: **0 266 936 B1**

# EUROPEAN PATENT SPECIFICATION

(45) Date of publication of patent specification: **13.05.92**  (51) Int. Cl.⁵: **C22C 32/00**, //F16K1/42, F01L3/02

(21) Application number: **87309260.5**

(22) Date of filing: **20.10.87**

The file contains technical information submitted after the application was filed and not included in this specification

(54) Powdered metal part.

(30) Priority: **29.10.86 US 924452**

(43) Date of publication of application:
**11.05.88 Bulletin 88/19**

(45) Publication of the grant of the patent:
**13.05.92 Bulletin 92/20**

(84) Designated Contracting States:
**DE FR GB IT**

(56) References cited:
**EP-A- 0 183 666**
**US-A- 4 569 693**

**PATENT ABSTRACTS OF JAPAN, vol. 6, no. 169 (C-122)[1047], 2nd September 1982; & JP-A-57 85 955 (MITSUBISHI KINZOKU K.K.) 28-05-1982**

**PATENT ABSTRACTS OF JAPAN, vol. 7, no. 242 (C-192)[1387], 27th October 1983; & JP-A-58 130 254 (MITSUBISHI KINZOKU K.K.) 03-08-1983**

(73) Proprietor: **EATON CORPORATION**
**Eaton Center, 1111 Superior Avenue**
**Cleveland Ohio 44114(US)**

(72) Inventor: **Larson, Jay Michael**
**337 North Kalamazoo**
**Marshall Michigan 49068(US)**

(74) Representative: **Wright, Peter David John et al**
**R.G.C. Jenkins & Co. 26 Caxton Street**
**London SW1H 0RJ(GB)**

# Description

The present invention relates generally to powder metallurgy, and more specifically to sintered powdered metal parts, especially engine parts such as valve seat inserts and valve guides, which contain solid lubricant.

Adhesive wear between relatively movable parts made by powder metallurgy has remained a persistant problem in spite of attempts to produce parts which contain a solid lubricant. The problem of adhesive wear occurs, for example, in connection with powdered metal engine parts, such as between valve guides and valve stems and between valve seat inserts and valve seat faces. It is particularly severe in heavy duty and natural gas engines. As diesel engines go to higher combustion peak pressures, the adhesive wear condition will be aggravated.

U.S. Patent No. 4,274, 875 describes a proposal for making a pre-lubricated powdered metal part such as a valve seat insert, in which powdered mica is included in a metal powder mixture prior to compacting and sintering the compact. Other conventional additives that have been proposed include molybdenum disulfide, bismuth, tin, lead, copper and phosphorus.

Also, U.S. Patent No. 4,569,693 teaches adding 300 to 2000 ppm finely divided extraneous metal oxides such as amorphous pyrogenic silica, amorphous alumina, titanium dioxide, talc or magnesium oxide to very fine powders of metal used to manufacture electronic valves and capacitors, in order to improve flowability of the powder prior to compacting.

The present invention seeks to reduce the problem of adhesive wear encountered with sintered powdered metal parts, especially valve and other engine parts.

According to the invention there is now provided a metal part comprising a sintered compact of metal powder and from 1 to 10% by weight based on the compact of talc dispersed substantially uniformly therein as solid lubricant.

Preferred embodiments of the invention are set out in the dependent claims.

During use, the exposed surface of the sintered metal part is worn away by adhesive wear. Pockets of the solid lubricant are spread over the exposed surface to reduce further wear. In addition to reducing adhesive wear, the addition of the solid lubricant improves machinability, such as reaming of valve seat inserts when assembled in a cylinder head. It also improves powder compaction.

The solid lubricant is added to the powder metal mixture in an amount of from 1 to 10% of the mixture with a preferred operating amount being in a range of up to about 4%. In the case of valve guides, a preferred addition is up to 3%, and in the case of valve seat inserts a preferred addition ranges up to 4%.

In this specification unless otherwise specified all mesh sizes are of the U.S. Standard Sieve Series and all percentages are weight percentages.

The invention provides also a method for making such a metal part and displaying improved machinability and/or resistance to adhesive wear and improved compactability in its powder form, which comprises pressing a die charge of metal powder and from 1 to 10% by weight based on the die charge of talc, to form a green compact and sintering the compact to form the metal part.

Insight into the efficacy of the invention can be gained by considering the properties of the solid lubricant talc. Talc, $Mg_3Si_4O_{10}(OH)_2$, is a hydrated magnesium silicate mineral. Its hardness is one on the Mohs Scale. It is softer than mica. Talc's extreme softness and lubricating qualities and its cost make it a highly preferred solid lubricant.

Consistent with conventional powder metallurgy practice the preferred particle size of the solid lubricants is quite small. A preferred talc for present purposes has average particle size of 32 $\mu$m and is called "200 mesh size" in the trade. An even finer grade, e.g., one having 20 $\mu$m average size, or a coarser grade, e.g., one have 40 $\mu$m average size, also is feasible. However, it is to be understood that the size ranges can be varied within the skill of the art depending upon particular applications.

Whereas the solid lubricant used in this invention survives sintering to exert its special lubricating effects in adhesive wear service, fugitive die lubricants, i.e., ones that decompose and at least partially vaporize during sintering, have their place in the present processing. Thus, it is desirable to use about 0.25-2% and preferably about 0.5-1% of a fugitive die lubricant well blended into the die charge. Representative of such fugitive die lubricants are stearates and stearamides such as zinc or lithium stearate or ethylene bis stearamide.

When temperatures above about 38°C (100°F) are a consideration, it is possible to include in the metal powder blend powdered manganese sulfide MnS in addition to talc. It is contemplated that manganese sulfide, if used, will be in the same proportion as talc. The blend of metal and other powders including all lubricants must be an intimate one to provide substantial uniformity in the resulting sintered compact.

Compaction is done generally with a die of desired shape. In the case of iron-based metal powders for making valve parts, the lubricated blend of powder is pressed to at least about 310 MPa (20 tons per square inch) and generally higher, e.g., 620-930 MPa (40-60 tons per square inch).

While sintering can be done between about 1060 and 1235°C (1940° and about 2250°F) in a protective atmosphere (preferably hydrogen or dissociated ammonia having dew point of -33°C (-28°F) or lower), the preferred temperature for efficiency and economy is about 1150°C (2100°F). Thirty minutes at the peak temperature appears to be adequate and economical for sintering. The sintered compact emerges with the talc intact. The fugitive lubricant that aided so well in the compacting has been dissipated or otherwise rendered ineffective.

In the manufacturing of valve guides, the blend for pressing is made up typically with about 0.25-1% of an ethylene stearamide or like fugitive lubricant and 1-10%, more preferably 1-3%, talc. Valve seat inserts are made using the same amount of such stearamide or like lubricant and up to 4%, preferably up to 2%, talc blended with austenitic stainless steel powder and a softer ferrous metal powder. The preparation of such an article (not lubricated with talc) is further described in copending European Patent Application 87309259.7 published on 11th May 1988 as 0266935.

The following Example illustrates the invention.

EXAMPLE

A powder blend was prepared containing about 92% Fe, 2% C, 5% Cu, and 1% talc. An ethylene stearamide mold lubricant wax was added to the blend in an amount of about 0.75% based on the weight of the unlubricated blend.

The resulting lubricated blend was pressed at 620-650 MPa (40-42 tons per square inch) to form green compacts for valves guides. The green compacts were sintered for 3 hours in a furnace maintained at 1150°C (2100°F) (the compacts being at furnace temperature for about 1/2 hour). Furnace atmosphere was dissociated ammonia having dewpoint of -33°C (-28°F).

Another set of valve guides was made in the same manner except that the talc was eliminated from the blend.

The lubricated and unlubricated guides were subjected to a valve stem scuffing rig designed to simulate wear of guides against valve stems under operating conditions.

The typical time to seizure for unlubricated guides was about 2 hours. No seizuring of the lubricated guides occurred after 100 hours of testing.

## Claims

1. A metal part comprising a sintered compact of metal powder and from 1 to 10% by weight based on the compact of talc dispersed substantially uniformly therein as solid lubricant.

2. A metal part according to claim 1, in the form of a valve seat insert.

3. A metal part according to claim 2, containing up to 4% talc.

4. A metal part according to claim 1, in the form of a valve guide.

5. A metal part according to claim 4, containing up to 3% talc.

6. A metal part according to claim 2 or claim 3, wherein the metal powder comprises austenitic stainless steel.

7. A method for making a metal part according to any one of claims 1 to 6 and displaying improved machinability and/or resistance to adhesive wear and improved compactability in its pre-sintered powder form, which comprises pressing a die charge of metal powder and from 1 to 10% by weight based on the die charge of talc into a green compact and sintering the compact to obtain the metal part.

8. A method according to claim 7, wherein the die charge contains also from 0.25 to 1% of fugitive die lubricant.

## Revendications

1. Pièce métallique comprenant un comprimé de poudre métallique fritté, et de 1 à 10 % en poids par rapport au comprimé, de talc dispersé à peu près uniformément dans celui-ci en tant que lubrifiant solide.

2. Pièce métallique selon la revendication 1, sous la forme d'un insert formant siège de soupape.

3. Pièce métallique selon la revendication 2, contenant jusqu'à 4 % de talc.

4. Pièce métallique selon la revendication 1, sous la forme d'un guide de soupape.

5. Pièce métallique selon la revendication 4, contenant jusqu'à 3 % de talc.

6. Pièce métallique selon la revendication 2 ou la revendication 3, dans laquelle la poudre métallique comprend un acier inoxydable austénitique.

7. Procédé de fabrication d'une pièce métallique selon l'une quelconque des revendications 1 à 6 ; ayant une aptitude à l'usinage et/ou une résistance à l'usure par adhérence améliorées, et une aptitude au compactage améliorée sous sa forme pulvérisée avant frittage, selon lequel on comprime une charge de poudre métallique dans une matrice, et de 1 à 10 % en poids de talc par rapport à la charge de matrice, pour former un comprimé vert, et on fritte le comprimé pour obtenir la pièce métallique.

8. Procédé selon la revendication 7, dans lequel la charge de matrice contient également de 0,25 à 1 % d'un lubrifiant de matrice fugitif.

**Patentansprüche**

1. Ein Metallteil, der einen gesinterten Kompaktkörper aufweist, aus Metallpulver und von 1 bis 10 Gewichtsprozent basierend auf dem Kompaktkörper von Talk verteilt, im wesentlichen gleichförmig darin als festes Schmiermittel.

2. Ein Metallteil nach Anspruch 1 in der Form eines Ventilsitzeinsatzes.

3. Ein Metallteil nach Anspruch 2, der bis zu 4 % Talk enthält.

4. Ein Metallteil nach Anspruch 1 in der Form einer Ventilführung.

5. Ein Metallteil nach Anspruch 4, der bis zu 3 % Talk enthält.

6. Ein Metallteil nach Anspruch 2 oder 3, wobei das Metallpulver austenitischen rostfreien Stahl aufweist.

7. Verfahren zur Herstellung eines Metallteils nach einem der Ansprüche 1 bis 6, und zwar eine verbesserte Bearbeitbarkeit und/oder Widerstand gegenüber adhesivem Abrieb und verbesserte Kompaktibilität in seiner vorgesinterten Pulverform aufweisend und wobei folgendes vorgesehen ist: Pressen einer Formladung des Metallpulvers und von 1 bis 10 Gewichtsprozent basierend auf der Formladung von Talk in einen grünen Kompaktkörper und Sintern des Kompaktkörpers zum Erhalt des Metallteils.

8. Verfahren nach Anspruch 7, wobei die Formladung ebenfalls von 0,25 bis 1 % flüchtiges Formschmierungsmittel enthält.